# EUROPÄISCHE PATENTANMELDUNG

(11) **EP 4 552 490 A1**
(43) Veröffentlichungstag der Anmeldung: **14.05.2025**
(21) Anmeldenummer: 23208524.1
(22) Anmeldetag: 08.11.2023
(51) Int. Cl.: A01K 13/00, A46B 9/00

(54) **KRATZBÜRSTE UND KRATZBÜRSTENANORDNUNG**

(71) Anmelder: Weber Bürstensysteme GmbH, 65520 Bad Camberg (DE)
(72) Erfinder: MENKEN, Ulrich, 65520 Bad Camberg (DE); KAISER, Tobias, 65618 Selters (DE)
(74) Vertreter: Weilnau, Carsten

(57) **Zusammenfassung**

Die vorliegende Entwicklung betrifft eine Kratzbürste (10) zur Anordnung an zumindest einer Trägerstruktur (1), wobei die Kratzbürste (10) folgendes umfasst:
- einen längserstreckten Bürstenkörper (11) mit einer transversal zu einer Längsrichtung (z) des Bürstenkörpers (11) gewölbten Oberseite (12), an welcher mehrere Borsten (5) angeordnet oder anordenbar sind,
- wobei der Bürstenkörper (11) eine der Oberseite (12) abgewandte Unterseite (13) zur Anlage und/oder zur Befestigung an der Trägerstruktur (1) aufweist und
- wobei der Bürstenkörper (11) zumindest eine erste Befestigungsstelle (21) für ein erstes Befestigungselement (41) aufweist, die bezogen auf eine sich quer oder senkrecht zur Längsrichtung (z) erstreckenden Umfangsrichtung (u) versetzt zu einer Mittellängsachse (6) des Bürstenkörpers (11) am oder im Bürstenkörper (11) ausgebildet ist.

## Beschreibung

### Technisches Gebiet

Die vorliegende Entwicklung oder Erfindung betrifft eine Kratzbürste, bzw. eine mehrere solcher Kratzbürsten aufweisende Kratzbürstenanordnung, insbesondere für Tiere, wie etwa Pferde, Rinder oder generell für Tiere, die ein Fell aufweisen.

### Hintergrund

Kratzbürsten zur Anordnung an einer Trägerstruktur sind im Stand der Technik hinlänglich bekannt. Sie weisen typischerweise einen Bürstenkörper mit einer gewölbten Außenoberfläche auf, an welcher mehrere längserstreckte Borsten angeordnet sind. Die etwa ortsfest an einer Trägerstruktur angeordnete Kratzbürste ermöglicht es den Tieren, ihr Fell, oder diverse Körperpartien an der Bürste, insbesondere an den flexiblen Borsten abzustreifen und sich somit zu kratzen. Dies dient der Hygiene sowie dem Tierwohl. Von der Bürste kann ein gewisser Massage- und Reinigungseffekt ausgehen. Beobachtungen zeigen, dass Tiere, wie etwa Rinder, Pferde, Ziegen und weitere, in einem Stall oder in einem Gehege gehaltene Tiere recht häufig von einer solchen Kratzbürste Gebrauch machen.

Gängige Kratzbürste weisen für die Befestigung an einer Trägerstruktur, etwa an einer Wand eine oder mehrere den Bürstenkörper durchsetzende Befestigungsstellen auf, mittels derer, etwa unter Zuhilfenahme von Schrauben oder Schraubbolzen die Kratzbürste an der Trägerstruktur befestigt werden kann. Bei gängigen und im Stand der Technik bekannten Bürstenkörpern befinden sich derartige Befestigungsstellen auf oder entlang einer Mittellängsachse der Kratzbürste.

Bei einer vertikalen Montage, etwa an einer Wand ist es bislang üblich, eine untere und eine obere Befestigungsstelle vorzusehen, die in Querrichtung der Kratzbürste etwa zentrisch oder mittig angeordnet sind. Zwar können auf diese Art und Weise derartige Kratzbürsten mit nur zwei Befestigungselementen an einer Wand ortsfest montiert werden. Die üblicherweise gewölbte Formgebung des Bürstenkörpers führt jedoch bei einer derartigen Montage durchaus zu Problemen, da insbesondere der in Querrichtung betrachtet mittige Bereich des Bürstenkörpers bei einer Wandmontage aufgrund der Außenwölbung des Bürstenkörpers vergleichsweise weit von einer Wand oder Trägerstruktur entfernt ist.

Die Verwendung besonders langer Schrauben oder dementsprechend lang ausgestalteter Befestigungsmittel ist hierfür erforderlich. Die Montage erweist sich dabei als vergleichsweise aufwendig und komplex. Demgegenüber liegt der vorliegenden Weiterentwicklung, bzw. Erfindung die Aufgabe zugrunde, eine verbesserte Kratzbürste zur Anordnung an zumindest einer Trägerstruktur bereit zu stellen, die sich besonders einfach an einer Trägerstruktur montieren lässt und die insbesondere universell an unterschiedliche Trägerstrukturen montierbar ist.

### Vorteilhafte Ausgestaltungen

Diese Aufgabe wird mittels einer Kratzbürste sowie mit einer Kratzbürstenanordnung mit den Merkmalen der unabhängigen Patentansprüche gelöst, wobei vorteilhafte Ausgestaltungen Gegenstand jeweils abhängiger Patentansprüche sind.

Insoweit und nach einem ersten Aspekt ist eine Kratzbürste zur Anordnung an zumindest einer Trägerstruktur vorgesehen. Die Kratzbürste umfasst einen längserstreckten Bürstenkörper mit einer transversal zu einer Längsrichtung des Bürstenkörpers gewölbten Oberseite, wobei an der Oberseite mehrere Borsten angeordnet oder anordenbar sind. Der Bürstenkörper weist ferner eine der Oberseite abgewandte Unterseite zur Anlage und/oder zur Befestigung an der Trägerstruktur auf. Der Bürstenkörper weist zumindest eine erste Befestigungsstelle für ein erstes Befestigungselement auf. Jene Befestigungsstelle ist bezogen auf eine sich quer oder senkrecht zur Längsrichtung erstreckenden Umfangsrichtung des Bürstenkörpers versetzt zu einer Mittellängsachse des Bürstenkörpers am oder im Bürstenkörper ausgebildet oder hieran vorgesehen.

Der Bürstenkörper, insbesondere seine gewölbte Oberseite ist in transversaler Richtung nach außen gewölbt.

Die transversale Richtung bezeichnet hier eine Richtung, die sich quer oder senkrecht zur Längserstreckung des Bürstenkörpers erstreckt. Die transversale Richtung oder eine entsprechende Transversalebene kann beispielsweise mit der von Umfangsrichtung und Radialrichtung gebildeten Ebene zusammenfallen, wobei die Umfangsrichtung und die Radialrichtung jeweils senkrecht zur Längsrichtung verlaufen. Die Radialrichtung verläuft ferner senkrecht zur Umfangsrichtung.

Mit anderen Worten kann der Bürstenkörper verhältnismäßig gut in Zylinderkoordinaten beschrieben werden. Der Bürstenkörper kann eine zylindrische Formgebung aufweisen. Insbesondere kann der Bürstenkörper als Teilbereich eines Zylinders beschrieben werden oder einen partiellen Zylinder aufweisen, welcher sich in Umfangsrichtung etwa nur über einen Bereich von 0° bis 90°, von 0° bis 120° oder über einen Bereich von 0° bis 180° erstreckt.

Insoweit kann der Bürstenkörper als partieller Zylinder oder als Halbzylinder ausgestaltet sein. Er kann in Längsrichtung insbesondere an seiner gewölbten Oberseite ein kontinuierliches Querschnittsprofil oder eine kontinuierlich in Längsrichtung verlaufende Außenoberfläche aufweisen, an welcher die Borsten angeordnet oder anordenbar sind. Dies verleiht dem Bürstenkörper, insbesondere seiner mit Borsten zu versehenden Oberseite, eine homogene gewölbte Ausgestaltung, die für die Tiere für einen Kratz- oder Massageeffekt von besonderem Vorteil ist.

Die die Oberseite kann in Umfangsrichtung von längserstreckten Außenrändern begrenzt sein. Im Bereich der Außenränder kann der Bürstenkörper an seiner Unterseite eine oder mehrere Anlageflächen aufweisen, mittels welcher der Bürstenkörper an der Trägerstruktur in Anlagestellung bringbar ist und über welche sich der Bürstenkörper in einer Montagestellung an der Trägerstruktur an besagter Trägerstruktur abstützen kann. Im Bereich der Mittellängsachse, d.h. desjenigen Bereichs des Bürstenkörpers, welcher verhältnismäßig weit oder welcher den größten Abstand zu den gegenüberliegenden Seitenrändern aufweist, ist die Erstreckung des Bürstenkörpers in Radialrichtung vergleichsweise groß, bzw. maximal.

Indem nun eine erste Befestigungsstelle für ein erstes Befestigungselement vorgesehen ist, welche welche in Umfangsrichtung versetzt zur Mittellängsachse des Bürstenkörpers am oder im Bürstenkörper ausgebildet ist, kann eine Montage der Kratzbürste unter Verwendung vergleichsweise kurzer Befestigungselemente, etwa in Form von vergleichsweise kurzen Schrauben oder Bolzen ermöglicht werden. Dies vereinfacht die Montage der Kratzbürste ungemein.

Zudem ist zu berücksichtigen, dass im Bereich einer Befestigungsstelle, welche bspw. als Durchgangsöffnung für ein Befestigungselement, etwa für eine Befestigungsschraube oder für einen Befestigungsbolzen ausgebildet sein kann, keine Borsten an der Oberseite des Bürstenkörpers vorgesehen werden können. Im Bereich einer Befestigungsstelle ist die Oberseite des Bürstenkörpers sozusagen borstenfrei auszugestalten, wodurch in jenem Bereich der Oberseite des Bürstenkörpers nur eine gegenüber angrenzenden Bereichen verminderte Borstendichte ermöglich werden kann.

Indem nun die zumindest eine Befestigungsstelle außerhalb der Mittellängsachse vorgesehen wird und somit zwangsläufig näher an den Außenrand des Bürstenkörpers verlagert wird, kann insbesondere der Bereich des Bürstenkörpers entlang der Mittellängsachse vollständig mit Borsten bestückt werden. Im Gebrauch ist gerade jener Bereich der Mittellängsachse die am häufigsten oder am intensivsten beansprucht. Durch die Verlagerung der zumindest einen Befestigungsstelle in Umfangsrichtung beabstandet von der Mittellängsachse kann der der durch die Befestigungsstelle bedingte borstenfreie Bereich des Bürstenkörpers näher an den Außenrand des Bürstenkörpers verlagert werden.

Bei einer Montage der Kratzbürste an einer flachen oder ebenen Wand unterliegen die bezogen auf die Umfangsrichtung im Randbereich liegenden Borsten einer weitaus geringeren Beanspruchung. Denn die randseitigen Borsten erstrecken sich gegebenenfalls parallel zur Ebene der Wand oder der Trägerstruktur und sind von den Tieren oftmals gar nicht oder nur in deutlich geringerem Maße zu erreichen als jene Borsten, die im Bereich der Mittellängsachse unter einem deutlich größeren Winkel, etwa senkrecht von einer Trägerstruktur, etwa von einer Wand abstehen.

Nach einer weiteren Ausführungsform weist die Oberseite des Bürstenkörpers in Umfangsrichtung eine konvexe oder kreisbogenförmige Wölbung auf. In Längsrichtung kann der Bürstenkörper insbesondere an seiner Oberseite ein kontinuierliches Oberflächenprofil, insbesondere eine sich kontinuierlich in Längsrichtung erstreckende Oberflächenstruktur aufweisen. Die konvexe oder kreisbogenförmige Wölbung kann auch an der Unterseite des Bürstenkörpers vorgesehen sein. Insoweit können die Unterseite und die Oberseite des Bürstenkörpers zueinander korrespondierende Formen oder Formgebungen aufweisen.

Bei einigen Ausführungsformen ist jedoch auch denkbar, dass die Unterseite des Bürstenkörpers eine vergleichsweise ebene Unterseite aufweist. An der Unterseite des Bürstenkörpers können ein oder mehrere, etwa in längs und/oder in Querrichtung eben ausgestaltete Anlagen oder Anlageflächen ausgebildet sein, die eine kipp- und/oder spielfreie ebene und insoweit sichere Anlage an einer Trägerstruktur ermöglichen.

Die konvexe oder kreisbogenförmige Wölbung an der Oberseite ermöglicht eine Anordnung oder Ausrichtung der Borsten etwa in der Radialrichtung und/oder zumindest bereichsweise in Tangentialrichtung. Auf diese Art und Weise kann eine besonders große effektive Bürstenfläche an den dem Bürstenkörper abgewandten freien Enden der Borsten bereitgestellt werden. Die Bürstenoberfläche kann somit besonders einfach und effektiv vergrößert werden, was den Kratzeffekt, insbesondere die Kratzwirkung gegenüber den Nutztieren verbessern oder verstärken kann.

Nach einer weiteren Ausgestaltung der Kratzbürste weist die Oberseite des Bürstenkörpers in Längsrichtung eine konstante Querschnittskontur und/oder eine sich kontinuierliche oder geradlinige, in Längsrichtung erstreckende Außenoberfläche an der Oberseite auf. Eine derartige Ausgestaltung der Oberseite ermöglicht es, dass die Kratzbürste in Längsrichtung des Bürstenkörpers annähernd oder im Wesentlichen identisch, bzw. gleichbleibende Kratz- oder Bürsteeigenschaften aufweist. Wird die Kratzbürste beispielsweise mit ihrer Längsrichtung vertikal ausgerichtet an der zum Beispiel ortsfesten Trägerstruktur montiert, so können unterschiedlich große Tiere an unterschiedlichen Teilbereichen in Längsrichtung der Kratzbürste einen entsprechenden Kratzeffekt erfahren.

Nach einer weiteren Ausgestaltung der Kratzbürste weist der Bürstenkörper in Umfangsrichtung betrachtet einen ersten Außenrand und einen gegenüberliegenden zweiten Außenrand auf. Die Außenränder können geradlinig ausgestaltet sein. Der erste Außenrand und der zweite Außenrand können parallel zueinander verlaufen. Insbesondere kann zumindest einer von erstem Außenrand und zweitem Außenrand im Wesentlichen parallel zur Mittellängsachse des Bürstenkörpers verlaufen. Der erste Außenrand kann beispielsweise ein linker Außenrand und der zweite Außenrand kann beispielsweise ein rechter Außenrand sein, wenn die Kratzbürste von oben, d.h. von ihrer Oberseite aus betrachtet wird. Der Bürstenkörper kann insbesondere im Bereich seine Außenränder, insbesondere mit seiner Unterseite angrenzend an die Außenränder an deren Trägerstruktur zur Anlage gelangen und in einer solchen Konfiguration, d.h. Anlageposition mit der Trägerstruktur verbunden oder hieran befestigt werden.

Die Außenränder können einen kontinuierlichen Verlauf in Längsrichtung aufweisen, sodass die Kratzbürste, mithin der Bürstenkörper in Längsrichtung betrachtet eine vergleichsweise große Anlagefläche zur Anlage an der Trägerstruktur aufweisen kann.

Nach einer weiteren Ausgestaltung ist die erste Befestigungsstelle am oder angrenzend an den ersten Außenrand im Bürstenkörper ausgebildet oder daran vorgesehen. Eine derartige randseitige Befestigungsstelle ermöglicht die Verwendung besonders kurzer und somit kostengünstiger Befestigungselemente, wie etwa Schrauben oder Befestigungsbolzen oder dergleichen. Ferner kann der Außenrand im Bereich der Befestigungsstelle borstenfrei ausgestaltet sein, wodurch die Montage nochmals erleichtert werden kann, da hier keine radial oder tangential von der Oberseite abragenden Borsten vorhanden sind, die ansonsten die Befestigung, insbesondere den Befestigungsvorgang beeinträchtigen.

Nach einer weiteren Ausgestaltung weist der Bürstenkörper zumindest eine zweite Befestigungsstelle für ein zweites Befestigungselement auf. Das zweite Befestigungselement ist in Umfangsrichtung versetzt zur Mittellängsachse und versetzt zur ersten Befestigungsstelle am oder im Bürstenkörper ausgebildet oder daran vorgesehen. Typischerweise ist die erste Befestigungsstelle zwischen der Mittellängsachse und dem ersten Außenrand vorgesehen oder am Bürstenkörper ausgebildet. Die zweite Befestigungsstelle ist dabei typischerweise zwischen dem zweiten Außenrand und der Mittellängsachse vorgesehen oder ausgebildet.

Die Positionen erster und zweiter Befestigungstellen für jeweils erste und zweite Befestigungselemente können in Umfangsrichtung spiegelsymmetrisch zur Mittellängsachse vorgesehen oder ausgebildet sein. Der Abstand der ersten Befestigungsstelle zur Mittellängsachse und/oder zum ersten Außenrand kann in etwa dem Abstand der zweiten Befestigungsstelle zur Mittellängsachse, bzw. zum zweiten Außenrand entsprechen. Auf diese Art und Weise ist eine symmetrische Anordnung und Befestigung der Kratzbürste an der Trägerstruktur möglich.

Nach einer weiteren Ausgestaltung ist die zweite Befestigungsstelle am oder angrenzend an den zweiten Außenrand im Bürstenkörper ausgebildet oder am zweiten Außenrand vorgesehen. Insoweit kann die Befestigungsstelle am zweiten Außenrand ähnlich oder nahezu identisch zur ersten Befestigungsstelle am ersten Außenrand vorgesehen oder ausgebildet sein. Dieselben Merkmale und Vorteile, wie zuvor zur ersten Befestigungsstelle am ersten Außenrand beschrieben, gelten hierbei gleichermaßen für die zweite Befestigungsstelle am zweiten Außenrand.

Nach einer weiteren Ausgestaltung der Kratzbürste ist die zweite Befestigungsstelle in Bezug auf die Längsrichtung an derselben Position oder auf derselben Höhe wie die erste Befestigungsstelle am oder im Bürstenkörper ausgebildet oder hieran vorgesehen. Auf diese Art und Weise kann der Bürstenkörper an ein und derselben Stelle in Längsrichtung bezogen mittels zwei in Umfangsrichtung hiervon etwa gleichermaßen beabstandeten Befestigungsstellen an der Trägerstruktur befestigt werden.

Nach einer weiteren Ausgestaltung der Kratzbürste ist die zweite Befestigungsstelle in Bezug auf die Längsrichtung des Bürstenkörpers gegenüber der ersten Befestigungsstelle versetzt am oder im Bürstenkörper ausgebildet oder hieran angeordnet oder vorgesehen. Bei einer derartigen Ausgestaltung kann der longitudinale Versatz erster und zweiter Befestigungsstellen für die Befestigung an der Trägerstruktur gegebenenfalls von Vorteil sein.

Ragen die Befestigungselemente an erster und zweiter Befestigungsstelle etwa radial einwärts von der Oberseite durch den Bürstenkörper derart hinein und gegebenenfalls auch von der Unterseite des Bürstenkörpers hervor, so können bei einer Anordnung erster und zweiter Befestigungsstellen auf derselben Höhe in Längsrichtung am oder im Bürstenkörper mitunter Probleme auftreten, als dass eine Gegenbefestigungsstelle der Trägerstruktur möglicherweise von zwei Befestigungselementen zu stark beansprucht wird. Ferner ist es hierbei denkbar, dass erste und zweite Befestigungselemente, welche an ersten und zweiten Befestigungsstellen durch den Bürstenkörper ragen, mit ihren etwa von der Unterseite des Bürstenkörpers hervorstehenden Enden oder Endabschnitten direkt miteinander kollidieren. Bei einer in Längsrichtung versetzten Ausgestaltung oder Anordnung erster und zweiter Befestigungsstellen kann eine derartige Kollision vermieden oder verhindert werden. Bei in Längsrichtung versetzten Befestigungsstellen kann auch die lokale Beanspruchung der Trägerstruktur reduziert werden.

Nach einer weiteren Ausgestaltung der Kratzbürste weist der Bürstenkörper zumindest eine dritte Befestigungsstelle auf, welche in Längsrichtung von der ersten Befestigungsstelle beabstandet am oder im Bürstenkörper ausgebildet ist. Bei einer weiteren Ausgestaltung hierzu ist insbesondere vorgesehen, dass die dritte Befestigungsstelle in Bezug auf die Umfangsrichtung auf oder an derselben Position wie die erste Befestigungsstelle am oder im Bürstenkörper ausgebildet ist. Insoweit kann für die dritte Befestigungsstelle ebenfalls eine Ausgestaltung am oder angrenzend an den ersten Außenrand vorgesehen sein. Das Vorsehen erster und dritter Befestigungsstellen ermöglicht eine mehrfache Befestigung der Kratzbürste an der Trägerstruktur in Bezug auf die Längsrichtung. Die mehrfache Befestigung ermöglicht eine besonders sichere und dauerhaltbare Befestigung der Kratzbürste an der Trägerstruktur.

Nach einer weiteren Ausführungsform der Kratzbürste weist der Bürstenkörper zumindest eine vierte Befestigungsstelle auf, welche in Längsrichtung von der zweiten Befestigungsstelle beabstandet am oder im Bürstenkörper ausgebildet oder vorgesehen ist. Auch die vierte Befestigungsstelle kann in Bezug auf die Umfangsrichtung auf oder an derselben Position wie die zweite Befestigungsstelle am oder im Bürstenkörper ausgebildet oder hieran angeordnet oder vorgesehen sein. Auf diese Art und Weise kann an derjenigen Position in Umfangsrichtung, in oder an welcher die zweite Befestigungsstelle vorgesehen oder ausgebildet ist, in Längsrichtung hierzu versetzt die vierte Befestigungsstelle vorgesehen oder ausgebildet sein, sodass auch diesbezüglich eine mehrfache Fixierung und Befestigung der Kratzbürste, insbesondere ihres Bürstenkörpers an der Trägerstruktur ermöglicht wird. Dies trägt zu einer besonders langlebigen, sicheren und haltbaren Befestigung der Kratzbürste an der Trägerstruktur bei.

Nach einer weiteren Ausführungsform ist die vierte Befestigungsstelle in Bezug auf die Längsrichtung auf derselben Höhe wie die dritte Befestigungsstelle am oder im Bürstenkörper ausgebildet. Insoweit gilt für die dritte und die vierte Befestigungsstelle analog dasselbe wie zuvor im Hinblick auf die erste und die zweite Befestigungsstelle beschriebenen Merkmale und Vorteile.

Ferner kann nach einer weiteren Ausführungsform auch die vierte Befestigungsstelle in Bezug auf die Längsrichtung gegenüber der dritten Befestigungsstelle versetzt am oder im Bürstenkörper ausgebildet sein. Auch hier gelten die zuvor im Hinblick auf den longitudinalen Versatz von erster und zweiter Befestigungsstelle beschriebenen Merkmale und Vorteile gleichermaßen für die dritte und vierte Befestigungsstelle.

Nach einer weiteren Ausführungsvariante sind die dritte und die vierte Befestigungsstelle in Bezug auf die Längsrichtung auf derselben Höhe angeordnet wenn auch die erste und die zweite Befestigungsstelle in Längsrichtung betrachtet auf oder an derselben Höhe am Bürstenkörper ausgebildet oder angeordnet sind. Ein longitudinaler Versatz zwischen der dritten und der vierten Befestigungsstelle, d.h. eine versetzte Anordnung von dritter und vierter Befestigungsstelle im Hinblick auf die Längsrichtung des Bürstenkörpers, ist nur dann gegeben, wenn auch die erste und die zweite Befestigungsstelle in longitudinaler Richtung, bzw. in Längsrichtung voneinander versetzt angeordnet sind.

Typischerweise ist der longitudinale Versatz zwischen der dritten und der vierten Befestigungsstelle gleich groß wie longitudinale Versatz zwischen der ersten und der zweiten Befestigungsstelle. Bei einer in Längsrichtung versetzten Anordnung von erster und zweiter Befestigungsstelle ist ein ähnlicher oder weitreichend identischer longitudinaler Versatz zwischen dritter und vierter Befestigungsstelle ebenfalls vorgesehen. Insbesondere ist ein bezogen auf eine Mittelquerachse des Bürstenkörpers symmetrischer Versatz von erster und zweiter, bzw. dritter und vierter Befestigungsstelle vorgesehen.

Jedwede dieser Ausgestaltungen ermöglichen es, dass etwa zwei identische Kratzbürsten etwa unter Umschließung einer Trägerstruktur wechselseitig miteinander verbindbar sind. Bei Ausgestaltungen der Kratzbürste, bei welchen die erste und die zweite Befestigungsstelle auf derselben Höhe und angrenzend an oder in Richtung zu erstem und zweitem Außenrand angeordnet sind, kann eine identische Kratzbürste mit ihren jeweiligen ersten und zweiten Befestigungsstellen mit den ersten und zweiten Befestigungsstellen der ersten Kratzbürste in Überdeckung gebracht werden. Mithin kann mittels eines Befestigungselements etwa eine erste Befestigungsstelle der ersten Kratzbürste mit einer zweiten Befestigungsstelle einer zweiten Kratzbürste etwa unmittelbar verbunden werden.

Gleichermaßen kann die zweite Befestigungsstelle der ersten Kratzbürste mit der ersten Befestigungsstelle der zweiten Kratzbürste verbunden werden. Bei einer in Längsrichtung versetzten Anordnung von erster und zweiter Befestigungsstelle ist hingegen eine wechselseitige Befestigung zweier Kratzbürsten untereinander ebenfalls möglich. Hierbei oder hierfür ist jedoch eine der beiden Kratzbürste um Ihre Mittelquerachse um etwa 180° zu drehen. Auf diese Art und Weise kann die erste Befestigungsstelle der ersten Kratzbürste mit der dritten Befestigungsstelle der zweiten Kratzbürste mechanisch gekoppelt oder mechanisch hiermit verbunden werden. Die zweite Befestigungsstelle der ersten Kratzbürste kann ferner mit der vierten Befestigungsstelle der zweiten Kratzbürste mechanisch verbunden werden. Ferner können die dritte Befestigungsstelle der ersten Kratzbürste mit der ersten Befestigungsstelle der zweiten Kratzbürste sowie die vierte Befestigungsstelle der ersten Kratzbürste mit der zweiten Befestigungsstelle der zweiten Kratzbürste verbunden werden.

Hierfür ist es erforderlich oder von Vorteil vorgesehen, dass der longitudinale oder Längsabstand in Längsrichtung von erster und dritter Befestigungsstelle zur gedachten Drehachse durch den Mittelpunkt des Bürstenkörpers in etwa gleich weit entfernt sind. Gleiches gilt für den Abstand zweiter und vierter Befestigungsstellen zur Mittelquerachse der Kratzbürste, bzw. des Bürstenkörpers.

Nach einer weiteren Ausgestaltung der Kratzbürste weist zumindest die erste Befestigungsstelle eine Durchgangsöffnung auf, die mit einer ersten Anlagefläche und mit einer zweiten Anlagefläche zur wahlweisen Anordnung des ersten Befestigungselements versehen ist. Als Befestigungselemente kommen insbesondere Schrauben oder Bolzen mit einem längserstreckten Schaft und mit einem Kopf an einem longitudinale Ende des Schafts infrage. Der Kopf, insbesondere eine dem Schaft zugewandte Anlagefläche des Kopfs ist hierbei wahlweise zur Anlage an der ersten oder zweiten Anlagefläche der Befestigungsstelle vorgesehen und/oder ausgebildet.

Indem die Befestigungsstelle eine Durchgangsöffnung mit erster und mit zweiter Anlagefläche aufweist, ermöglicht die Befestigungsstelle eine überaus variable Aufnahme und Anlage des Befestigungselements. Dieses kann an zumindest der ersten Befestigungsstelle auf zwei verschiedene Arten befestigt, mithin in zwei verschiedenen Ausrichtungen oder Konfigurationen an der ersten oder eben an der zweiten Anlagefläche der Befestigungsstelle zur Anlage gelangen und in jener Anlagestellung jeweils eine geeignete Befestigung der Kratzbürste an der Trägerstruktur bewirkten.

Ein freies Ende des Befestigungselements, etwa ein dem Kopf abgewandtes freies Ende des Schafts steht typischerweise von der Unterseite des Bürstenkörpers hervor und kann entweder unmittelbar mit der Trägerstruktur in Eingriff gelangen oder aber mittels eines gesonderten Gegenbefestigungselements an einer weiteren Kratzbürste, etwa einer identisch ausgestalteten Kratzbürste befestigt werden.

Nach einer weiteren Ausgestaltung weist die erste Anlagefläche der zumindest ersten Befestigungsstelle eine erste Flächennormale auf. Die zweite Anlagefläche der zumindest ersten Befestigungsstelle weist eine zweite Flächennormale auf. Die erste Flächennormale erstreckt sich unter einem vorgegebenen Winkel in einer von Umfangsrichtung und einer Radialrichtung gebildeten Querebene von der zweiten Flächennormalen. Die Winkelabweichung kann hierbei zwischen 15° und 75° betragen. Bei einigen Ausführungsformen kann sie zwischen 30° und 60° betragen. Bei weiteren Ausführungsformen kann sie etwa 45° betragen.

Dies ermöglicht eine Aufnahme, bzw. Anlage des zumindest einen oder ersten Befestigungselements in zwei verschiedenen Ausrichtungen, die sich etwa um 45° oder in einem Bereich von 15° bis 75° voneinander unterscheiden. Eine derart ausgestaltete Befestigungsstelle ermöglicht eine besonders variable und universelle Anordnung, bzw. Befestigung der Kratzbürste an der vorhandenen oder vorgegebenen Trägerstruktur.

Nach einer weiteren Ausgestaltung der Kratzbürste weist zumindest die erste Befestigungsstelle einen in den ersten Außenrand hineinragenden Schlitz auf. Der Schlitz kann in Richtung Außenrand offen ausgestaltet sein, sodass etwa ein Befestigungselement in Tangentialrichtung und/oder in Umfangsrichtung in die Befestigungsstelle eingeführt und alsdann an der ersten oder zweiten Anlagefläche angrenzend an die Durchgangsöffnung der Befestigungsstelle zur Anlage bringbar ist und somit eine entsprechende Anpresskraft auf die erste oder zweite Anlagestelle ausüben kann, wenn etwa ein freies Ende des Befestigungselements mit der Trägerstruktur oder mit einem Gegenbefestigungselement in Eingriff gelangt.

Die Ausgestaltung eines Schlitzes, insbesondere eines randseitigen Schlitzes ermöglicht das seitliche Einführen des Befestigungselements in die Befestigungsstelle. Dies ist insbesondere bei einer wechselseitigen Befestigung einer ersten Kratzbürste unmittelbar an einer zweiten Kratzbürste, etwa unter Einschließung oder etwa unter Aufnahme einer sich zwischen erster und zweiter Kratzbürste befindlichen Trägerstruktur von Vorteil.

So kann beispielsweise ein Befestigungselement mit jeweils einer Befestigungsstelle an einer ersten Kratzbürste und an einer zweiten Kratzbürste zur Anlage gelangen oder mechanisch mit den betreffenden Befestigungsstellen erster und zweiter Kratzbürsten wechselwirken, um beispielsweise die erste und die zweite Kratzbürste gegeneinander zu verspannen oder und/oder um erste und zweite Kratzbürsten aneinander zu befestigen. Dies ist insbesondere dann von Vorteil, wenn die Trägerstruktur beispielsweise einen längserstreckten Pfahl oder Pfosten aufweist, der von jeweils einer Kratzbürste nur partiell in Umfangsrichtung umschlossenen wird.

Dadurch dass zumindest zwei Kratzbürsten an gegenüberliegende Außenseiten einer solchen Trägerstruktur zur Anlage gebracht werden, können die jeweiligen Kratzbürste in etwa überdeckend mit ihren korrespondierenden Befestigungsstellen zueinander ausgerichtet und unter Verwendung eines oder mehrerer Befestigungselemente unmittelbar miteinander verbunden werden, sodass die Trägerstruktur, welche sich zwischen den beiden Kratzbürsten, insbesondere zwischen den Unterseiten der Kratzbürste befindet, zwischen den Kratzbürste eingeklemmt werden kann.

Insoweit kann die randseitige Anordnung oder Ausgestaltung einer oder mehrerer Befestigungsstellen im jeweiligen Bürstenkörper eine klemmende Anordnung zweier Bürstenkörper an ein und derselben etwa längserstreckten Trägerstruktur, etwa an einem Pfosten oder Pfahl ermöglichen, ohne dass etwa Befestigungselemente in den Pfosten oder in den Pfahl eingeschraubt oder unmittelbar mit der Trägerstruktur in Eingriff gebracht werden müssen.

Ist als Trägerstruktur beispielsweise ein längserstreckter Pfosten aus Metall oder aus Beton oder aus einem keramischen Material vorgesehen, kann das unmittelbare Einschrauben oder Befestigen von Befestigungselementen hieran äußerst komplex und aufwendig sein. Indem man nun eine erste und eine zweite Kratzbürste an gegenüberliegenden Seiten der Trägerstruktur anordnet und erste und zweite Kratzbürsten mittels den randseitigen Befestigungsstellen unter Verwendung zumindest eines oder unter Verwendung mehrerer Befestigungselemente wechselseitig etwa unmittelbar miteinander verbindet, kann auf eine unmittelbare Wechselwirkung eines Befestigungselements, etwa einer Schraube mit der Trägerstruktur verzichtet werden.

Die Montage und Demontage der Kratzbürste an einer Trägerstruktur kann sich hierdurch deutlich vereinfachen. Ferner nimmt die Trägerstruktur durch die etwa temporäre Anordnung einer Kratzbürste oder Kratzbürstenanordnung keinen Schaden. So sind bei der hier beschriebenen klemmenden Anordnung zweier Kratzbürsten an der Trägerstruktur keinerlei Modifikationen an der Trägerstruktur vorzunehmen. Insbesondere muss die Trägerstruktur nicht für die Aufnahme eines Befestigungselements angebohrt werden. Die Integrität der Trägerstruktur kann vollkommen erhalten bleiben.

Nach einer weiteren Ausgestaltung der Kratzbürste ist eine Erstreckung des Schlitzes der Befestigungsstelle in Umfangsrichtung derart bemessen, dass das erste Befestigungselement sowohl in Anlagestellung mit der ersten Anlagefläche als auch in Anlagestellung mit der zweiten Anlagefläche die Durchgangsöffnung der ersten Befestigungsstelle derart durchsetzt, dass das Befestigungselement zur Befestigung mit einem korrespondierenden Gegenbefestigungselement oder zur Befestigung an der Trägerstruktur mit einem distalen Ende von der Unterseite des Bürstenkörpers hervorsteht.

Die Anlagestellung an der ersten oder zweiten Anlagefläche bewirkt, dass die Position des freien Endes des Befestigungselements an der Unterseite des Bürstenkörpers variieren, mitunter auch stark variieren kann. Auf diese Art und Weise kann unterschiedlichen Montageanforderungen, welche etwa von der Trägerstruktur oder deren Querschnittsgeometrie ausgehen, individuell Rechnung getragen werden.

Nach einer weiteren Ausführungsform der Kratzbürste weist der Bürstenkörper an der Unterseite eine erste Anlagestelle und eine zweite Anlagestelle auf. Die erste Anlagestelle grenzt hierbei an den ersten Außenrand an. Die zweite Anlagestelle grenzt an den zweiten Außenrand an. Erste und zweite Anlagestellen können sich kontinuierlich in Längsrichtung über die gesamte oder zumindest bereichsweise über die Unterseite des Bürstenkörpers erstrecken. Die erste und die zweite Anlagestelle können mit ihren jeweiligen Anlageflächen zum Beispiel auch parallel in Längsrichtung zueinander ausgerichtet sein. Sie können in Querrichtung oder Umfangsrichtung einen konstanten Abstand zueinander aufweisen. Auf diese Art und Weise kann eine besonders stabile, sichere und definierte Anlage der Kratzbürste an einer entsprechenden Trägerstruktur bereitgestellt werden oder realisiert werden.

Nach einer weiteren Ausgestaltung der Kratzbürste weist die erste Anlagestelle eine erste Anlagefläche auf. Die zweite Anlagestelle weist eine zweite Anlagefläche auf. Die erste Anlagefläche und die zweite Anlagefläche können parallel und/oder fluchtend zueinander verlaufen, bzw. sie können dementsprechend zueinander ausgerichtet sein.

Eine derartige Ausgestaltung erster und zweiter Anlagestellen mit fluchtend oder parallel zueinander verlaufenden Anlageflächen, die zum Beispiel auch im oder am Randbereich des Bürstenkörpers vorgesehen sein können, ermöglichen eine definierte, insbesondere kipp- und spielfreie und in Bezug auf den Außenrand der Unterseite der Kratzbürste nahezu vollflächige Anlagestellung an einer Trägerstruktur, etwa an einer ebenen Wand. Derartig ausgestaltete Anlagestellen mit entsprechenden Anlageflächen ermöglichen eine besonders sichere, kippt- und spielfreie sowie einfache und dauerhaltbare Anordnung und Befestigung der Kratzbürste an der Trägerstruktur, etwa an einer Wand.

Nach einer weiteren Ausgestaltung weist der Bürstenkörper an der Unterseite eine dritte Anlagestelle auf, welche eine gegenüber einer gedachten ebenen Unterseite längserstrecke Ausnehmung oder Vertiefung mit einer dritten Anlagefläche aufweist. Die dritte Anlagefläche befindet sich im Bereich der Ausnehmung oder Vertiefung an der Unterseite des Bürstenkörpers.

Eine Vertiefung oder Ausnehmung, welche sich zum Beispiel auch kontinuierlich in Längsrichtung entlang der Unterseite des Bürstenkörpers erstreckt ermöglicht eine unmittelbare Montage der Trägerstruktur, etwa an einem Pfosten oder Pfahl. Die Geometrie der Vertiefung oder Ausnehmung im Bereich der dritten Anlagestelle kann insbesondere an eine Außenkontur der Trägerstruktur angepasst sein. Weist die Trägerstruktur beispielsweise einen ovalen oder kreisrunden Querschnitt auf, so kann die Vertiefung, bzw. die längserstrecke Ausnehmung im Bereich der dritten Anlagestelle des Bürstenkörpers eine dementsprechende Wölbung oder konkave Wölbung aufweisen, sodass in Umfangsrichtung betrachtet die Ausnehmung oder Vertiefung möglichst großflächig oder gar vollflächig und somit möglichst sicher an der Außenseite der Trägerstruktur zur Anlage bringbar ist.

Nach einer weiteren Ausgestaltung ist die dritte Anlagestelle in Bezug auf die Umfangsrichtung oder in Bezug auf eine Querrichtung senkrecht zur Längsrichtung zwischen der ersten Anlagefläche und der zweiten Anlagefläche an der Unterseite ausgebildet. Dies ermöglicht eine universelle Montage der Kratzbürste an unterschiedlichen Trägerstrukturen. Die erste und die zweite Anlagefläche ermöglichen insbesondere eine Anlage und Montage an einer ebenen Wandstruktur. Die dritte Anlagefläche ermöglicht die Anlage und Montage an einem Pfosten oder Pfahl.

Nach einer weiteren Ausgestaltung der Kratzbürste weist die Ausnehmung oder Vertiefung in der Querebene, welche von der Umfangsrichtung und der Radialrichtung des Bürstenkörpers gebildet ist, eine konkave oder kreisbogenförmige Wölbung auf. Insbesondere ist die Ausnehmung oder Vertiefung als Hohlkehle ausgestaltet, die es ermöglicht, eine der Innenkontur der Ausnehmung oder Vertiefung korrespondierende Trägerstruktur aufzunehmen, bzw. die Kratzbürste mit ihrer konkaven oder kreisbogenförmigen Wölbung möglichst passgenau an der Außenkontur der Trägerstruktur anzubringen.

Nach einer weiteren Ausführungsform der Kratzbürste ist vorgesehen, dass die zumindest erste Befestigungsstelle mit ihrer ersten Flächennormale in etwa parallel zur Anlagefläche oder zu einer entsprechenden Flächennormalen der ersten Anlagefläche verläuft. Auf diese Art und Weise kann erreicht werden, dass ein Befestigungselement, welches an der ersten Anlagefläche zur Anlage gelangt mit einem freien Ende den Bürstenkörpers durchsetzend von der ersten Anlagefläche oder der zweiten Anlagefläche von der Unterseite des Bürstenkörpers hervorsteht. Ein Befestigungselement, welches mit der zweiten Anlagefläche des ersten Befestigungsabschnitts zur Anlage gelangt kann ebenfalls von einem von der ersten und der zweiten Anlagestelle von der Unterseite des Bürstenkörpers hervorstehen. Jedoch kann das freie Ende des Befestigungselements, welches von der Unterseite des Bürstenkörpers hervorsteht in diesem Fall deutlich näher zur dritten Anlagefläche positioniert sein oder gar auch in die dritte Anlagefläche hineinragen.

Bei weiteren Ausführungsformen ist vorgesehen und denkbar, dass das Befestigungselement in Anlagestellung mit der zweiten Anlagefläche des zumindest ersten Befestigungsstelle in die dritte Anlagefläche an der Unterseite hineinragt oder von der dritten Anlagefläche von der Unterseite des Bürstenkörpers hervorsteht. Durch die gegenüber der ersten Anlagefläche geneigte Ausrichtung der zweiten Anlagefläche kann eine schräge Montage des Befestigungselements, bzw. eine Durchsetzung des Bürstenkörpers mittels des Befestigungselements schräg zur ersten oder zweiten Anlagefläche an der Unterseite des Bürstenkörpers oder schräg zur Unterseite des Bürstenkörpers erfolgen.

Auf diese Art und Weise kann beispielsweise das Befestigungselement unmittelbar mit einer Trägerstruktur in Eingriff gelangen, welche sich überwiegend oder ausschließlich im Bereich der dritten Anlagefläche befindet, wenn die Kratzbürste an der Trägerstruktur bestimmungsgemäß angeordnet ist.

Nach einer weiteren Ausgestaltung sind sämtliche Befestigungsstellen, falls vorhanden, insbesondere zweite, dritte und vierte Befestigungsstellen im Wesentlichen identisch zur zuvor beschriebenen ersten Befestigungsstelle ausgestaltet. Sämtliche Befestigungsstellen können einen in den Außenrand hineinragenden Schlitz sowie eine Durchgangsöffnung mit erster und zweiter Anlagefläche aufweisen.

Nach einer weiteren Ausgestaltung der Kratzbürste weist die Ausnehmung oder Vertiefung der dritten Anlagefläche an der Unterseite des Bürstenkörpers einen ersten Schenkel und einen zweiten Schenkel auf. Der erste und der zweite Schenkel können jeweils als geradlinige Schenkel ausgestaltet sein. Der erste Schenkel verläuft hierbei in der Querebene unter einem ersten Winkel schräg zu einer gedachten ebenen Unterseite des Bürstenkörpers. Der zweite Schenkel verläuft unter einem zweiten Winkel schräg zur gedachten ebenen Unterseite des Bürstenkörpers.

Erste und zweite Winkel sind hierbei unterschiedlich. Sie können symmetrisch in Bezug auf die Mittellängsachse ausgebildet sein. Mit anderen Worten kann der erste Schenkel in Bezug auf eine Mittelsenkrechte oder eine Mittellängsachse der Kratzbürste, bzw. des Bürstenkörpers symmetrisch zum zweiten Schenkel ausgestaltet oder ausgebildet sein. Das Vorsehen ebener Schenkel insbesondere im Bereich der dritten Anlagefläche ermöglicht etwa eine Montage der Kratzbürste an einer Trägerstruktur mit einer Außenkontur, die der Innenkontur erster und zweiter Schenkel entspricht.

Erstrecken sich der erste und der zweite Schenkel beispielsweise unter einem relativen Winkel von 90° in der Querebene so kann die Kratzbürste beispielsweise an einem 90° Außeneck einer Trägerstruktur angeordnet werden. Dies ermöglicht beispielsweise die unmittelbare Befestigung der Kratzbürste an einem eckigen Profi, etwa an einem im Querschnitt eckigen Pfahl oder Pfosten sowie an einer Ecke einer Wand oder Wandstruktur.

Nach einer weiteren Ausgestaltung weist der erste Schenkel ein erstes Innenende auf, welches der Mittellängsachse zugewandt ist und der zweite Schenkel weist ein zweites Innenende auf, welches ebenfalls der Mittellängsachse des Bürstenkörpers zugewandt ist. Das erste Innenende grenzt hierbei in einem stumpfen Winkel oder in einem spitzen Winkel unmittelbar an das zweite Innenende an. Mit anderen Worten gehen erster und zweiter Schenkel mit ihren Innenenden unmittelbar ineinander über. An ihren Innenenden bilden die ersten und zweiten Schenkel eine Art Inneneck oder eine Inneneck Ausgestaltung, die eine unmittelbare Anlage bzw. Montage an einer Außenecke einer Trägerstruktur ermöglicht.

In einem weiteren Aspekt betrifft die vorliegende Erfindung ferner eine Kratzbürstenanordnung. Die Kratzbürstenanordnung umfasst eine erste zuvor beschriebene Kratzbürste sowie eine zweite zuvor beschriebene Kratzbürste. Erste und zweite Kratzbürste können hierbei im Wesentlichen identisch ausgestaltet sein. Die erste Kratzbürste weist zumindest eine erste Befestigungsstelle und eine zweite Befestigungsstelle auf, die in Umfangsrichtung voneinander versetzt im oder am Bürstenkörper ausgebildet sind. Auch die zweite Kratzbürste weist eine erste und eine zweite Befestigungsstelle auf, die in Umfangsrichtung voneinander versetzt im oder am Bürstenkörper ausgebildet oder vorgesehen sind.

Die erste und die zweite Kratzbürste können ferner mit ihren Unterseiten einander zugewandt und unter Einschluss oder unter einer Aufnahme einer Trägerstruktur mittels erster und zweiter Befestigungselemente über ihre jeweiligen ersten und zweiten Befestigungsstellen miteinander verbunden werden. So kann beispielsweise eine erste Befestigungsstelle der ersten Kratzbürste mittels eines Befestigungselements, etwa in Form eines Schraubbolzens, und gegebenenfalls mittels eines ersten hiermit korrespondierenden Gegenbefestigungselements, etwa in Form einer Schraubenmutter, mit der zweiten Befestigungsstelle der zweiten Kratzbürste verbunden werden.

Gleichermaßen kann die zweite Befestigungsstelle der ersten Kratzbürste mit der ersten Befestigungsstelle der zweiten Kratzbürste verbunden werden. Auch dort kann die Befestigung mittels zumindest eines Befestigungselements, gegebenenfalls unter Verwendung eines hiermit korrespondierenden oder komplementär ausgestalteten Gegenbefestigungselements erfolgen.

Die Kratzbürstenanordnung weist zwei identische Kratzbürsten auf, wie diese zuvor beschrieben wurden. Insoweit gelten sämtliche zuvor zur Kratzbürste beschriebenen Merkmale, Vorteile und Wirkungen auch gleichermaßen für die Kratzbürstenanordnung und umgekehrt. Bei ersten und zweiten Kratzbürsten, die insgesamt über jeweils vier Befestigungsstellen verfügen, von denen erste und dritte Befestigungsstellen zum Beispiel am linken Seitenrand und bei denen zum Beispiel zweite und vierte Befestigungsstellen am rechten Außenrand vorgesehen sind, können die beiden Kratzbürsten, nämlich erste und zweite Kratzbürste derart an gegenüberliegenden Seiten der Trägerstruktur befestigt werden, sodass etwa die erste Befestigungsstelle der ersten Kratzbürste mit der zweiten Befestigungsstelle der zweiten Kratzbürste verbunden wird, die zweite Befestigungsstelle der ersten Kratzbürste mit der ersten Befestigungsstelle der zweiten Kratzbürste verbunden wird, die dritte Befestigungsstelle der ersten Kratzbürste mit der vierten Befestigungsstelle der zweiten Kratzbürste und die vierte Befestigungsstelle der ersten Kratzbürste mit der dritten Befestigungsstelle der zweiten Kratzbürste verbunden wird.

Eine derartige Ausgestaltung ist insbesondere dann vorgesehen, wenn erste und zweite Befestigungsstellen, mithin dritte und vierte Befestigungsstellen auf einem Höhenniveau in Bezug auf die Längsrichtung des Bürstenkörpers angeordnet oder hieran ausgebildet sind.

Bei in Längsrichtung voneinander versetzt angeordneten ersten und zweiten Befestigungsstellen ist es für die wechselseitige Montage und Befestigung erster und zweiter Kratzbürste zueinander erforderlich, eine der beiden Kratzbürste in Bezug auf ihre Querachse etwa um 180° zu drehen. Alsdann kann die erste Befestigungsstelle der ersten Kratzbürste mit der dritten Befestigungsstelle der zweiten Kratzbürste und die zweite Befestigungsstelle der ersten Kratzbürste mit der vierten Befestigungsstelle der zweiten Kratzbürste verbunden werden. Die dritte Befestigungsstelle der ersten Kratzbürste kann alsdann mit der ersten Befestigungsstelle der zweiten Kratzbürste und die vierte Befestigungsstelle der ersten Kratzbürste mit der zweiten Befestigungsstelle der zweiten Kratzbürste verbunden werden.

Für den wechselseitigen Verbund von Befestigungsstellen erster und zweiter Kratzbürste ist für je ein Paar von Befestigungsstellen die Bereitstellung eines Befestigungselements und gegebenenfalls eines hierzu komplementär ausgestalteten Gegenbefestigungselements vorgesehen und/oder notwendig. Insgesamt können bei vier Befestigungsstellen je Kratzbürste eine Kratzbürstenanordnung umfassend erste und zweite Kratzbürste und unter Umschließung oder unter Einschluss der Trägerstruktur insgesamt vier Befestigungselemente und entsprechende Gegenbefestigungselemente erforderlich, zugleich aber auch ausreichend sein.

### Kurzbeschreibung der Figuren

Nachfolgend werden diverse Ausführungsformen der Kratzbürste und der Kratzbürstenanordnung unter Bezugnahme auf die Zeichnungen näher erläutert. Hierbei zeigen:
- Fig. 1: eine perspektivische Darstellung einer Ausführungsform der Kratzbürste von schräg oben betrachtet,
- Fig. 2: eine isolierte Darstellung des Bürstenkörpers der Kratzbürste gemäß Fig. ein,
- Fig. 3: eine Draufsicht auf eine Ausführungsvariante des Bürstenkörpers einer Kratzbürste,
- Fig. 4: eine weitere Ausführungsform eines Bürstenkörpers für die Kratzbürste ebenfalls in Draufsicht von oben,
- Fig. 5: einen Querschnitt durch die Kratzbürste gemäß Fig. 2 im Bereich erster und zweiter Befestigungsstellen,
- Fig. 6: einen Querschnitt gemäß Fig. 5 jedoch mit Befestigungselementen zur Verdeutlichung möglicher Befestigungskonfigurationen der Kratzbürste an unterschiedlichen Trägerstrukturen,
- Fig. 7: eine vergrößerte Darstellung eines Ausschnitts der Bürste im Bereich einer ersten Befestigungsstelle,
- Fig. 8: eine geschnitten perspektivische Darstellung der Kratzbürste, bzw. des Bürstenkörpers gemäß Fig. 2,
- Fig. 9: eine perspektivische Darstellung des Bürstenkörpers gemäß Fig. 2 von der Unterseite her betrachtet und
- Fig. 10: ein Beispiel einer Kratzbürstenanordnung umfassend erste und zweite Kratzbürsten.

### Detaillierte Beschreibung

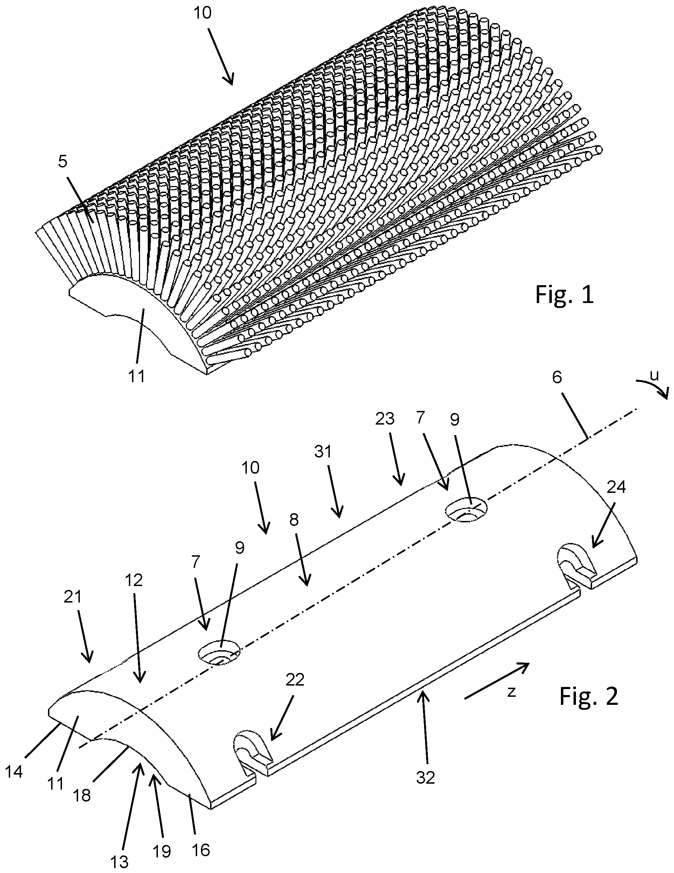

Die in Fig. 1 perspektivisch dargestellte Kratzbürste 10 ist zur Montage an einer Trägerstruktur 1, 1' ausgestaltet. Die Kratzbürste 10 weist einen Bürstenkörper 11 auf, welcher in den übrigen Figuren überwiegend gezeigt ist. Der Bürstenkörper 11 weist eine nach außen gewölbte Oberseite 12 und eine gegenüberliegende Unterseite 13 auf. Die Oberseite 12 kann nach Art einer Zylinder-Halbschale 4 ausgestaltet sein. Sie weist in einer Längsrichtung z des Bürstenkörpers 11 eine kontinuierliche oder ebene Oberflächenkontur auf. An der Unterseite 13 können ein oder mehrere Anlagestellen 14, 16, 18 zur Anlage des Bürstenkörpers 11 an der Trägerstruktur 1, 1' vorgesehen sein.

Der Bürstenkörper 11 kann insbesondere eine Zylinder-Halbschale 4 aufweisen, welche in Längsrichtung von zwei Stirnwänden 2, 2' begrenzt ist. Eine Innenseite des Bürstenkörpers 11 kann nach Art einer Halbschale 4 ausgestaltet sein. Auf der Außenoberfläche 8 der Oberseite 12 sind, wie insbesondere in Fig. 1 gezeigt, mehrere Borsten 5 angeordnet, die mit ihren freien Enden den Außenumfang der Kratzbürste 10 bilden oder hierzu beitragen. Die Außenenden der Borsten 5, d.h. diejenigen Enden, die dem Bürstenkörper 11 abgewandt sind, bilden eine Borsten oder Bürstenfläche, an welcher sich insbesondere Tiere reiben oder kratzen können.

Der als zylindrische Halbschale 4 ausgestaltete Bürstenkörper 11 kann eine Mittellängsachse 6 aufweisen, wie sie schematisch in Fig. 2 dargestellt ist. Entlang der Mittellängsachse 6 können optionale Befestigungsstellen 7 etwa für ein Befestigungselement 41 vorgesehen sein. Jene Befestigungsstellen 7 weisen eine Durchgangsöffnung 9 auf, welche sich vollständig durch den Bürstenkörper 11 erstreckt. Ein geeignetes Befestigungselement 41, etwa ein Schraubbolzen oder eine entsprechende Schraube muss hierbei derart lang bemessen sein, dass sie die gesamte Radialerstreckung des Bürstenkörpers 11 von der Oberseite 12 im Bereich der Durchgangsöffnung 9 durchsetzt und dann auch noch in oder mit einer Trägerstruktur 1, 1' in Eingriff gelangt.

Der Bürstenkörper 11 kann als Kunststoffbauteil, insbesondere als einteiliges Kunststoff-Gussteil oder Kunststoffspritz-Bauteil oder Kunststoffspritzguss-Bauteil ausgestaltet sein. Der Bürstenkörper 11 kann an seiner Unterseite 13 mehrere Rippen 3 aufweisen, die sich in etwa in der Querebene, d.h. in einer Ebene erstrecken, die von der Umfangsrichtung u und von der Radialrichtung r gebildet ist. Mittels der Rippen 3 kann die Halbschale 4, bzw. der Bürstenkörper 11 strukturell verstärkt werden, sodass insgesamt eine vergleichsweise dünnwandige Halbschale 4 realisierbar ist, die eine für den Einsatzzweck ausreichende Steifigkeit und/oder Stabilität aufweist.

Die Oberseite 12 des Bürstenkörpers 11 ist in Umfangsrichtung kreisbogenförmig gewölbt. Die Borsten 5 können hierbei tangential und/oder radial von der gewölbten Oberseite 12 abstehen, sodass insgesamt eine vergleichsweise große Außenoberfläche der Kratzbürste 10 realisiert und verwirklicht werden kann.

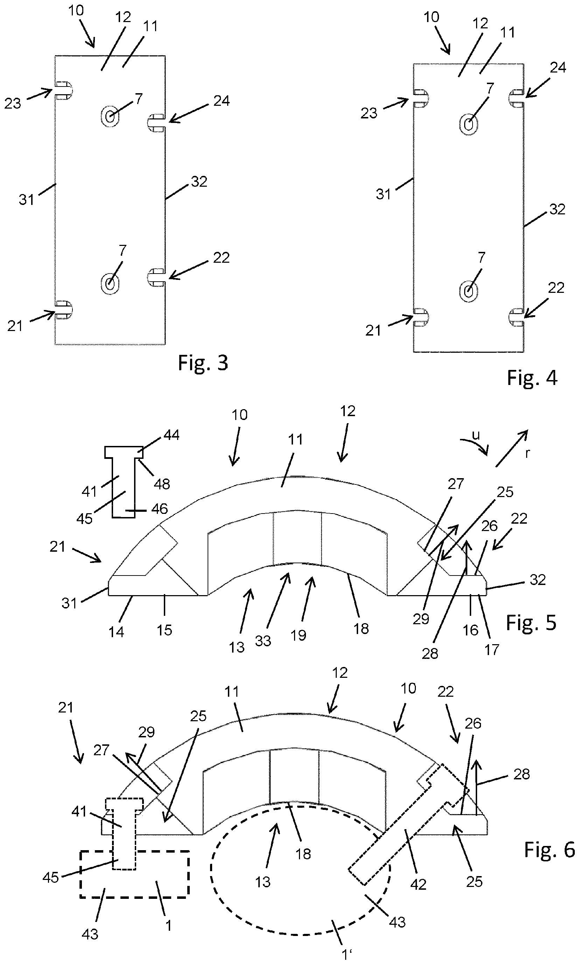

Zur Befestigung der Kratzbürste 10 an einer Trägerstruktur 1, 1', wie insbesondere in Fig. 6 dargestellt, weist der Bürstenkörper 11 mehrere Befestigungsstellen 21, 22, 23, 24 auf, die vorliegend auch als erste, zweite, dritte oder vierte Befestigungsstellen betrachtet werden können.

Die erste Befestigungsstelle 21 ist hierbei an oder angrenzend an einen ersten Außenrand 31 des Bürstenkörpers 11 ausgebildet oder derart randseitig am Bürstenkörper 11 vorgesehen. Die weiteren Befestigungsstellen, etwa eine zweite Befestigungsstelle 22 ist an einer gegenüberliegenden Außenseite 33, oder einem entsprechenden Außenrand 32 des Bürstenkörpers 11 vorgesehen. Beim Ausführungsbeispiel der Fig. 4 ist vorgesehen, dass erste und zweite Befestigungsstellen 21, 22 im Wesentlichen die gleiche Position in Bezug auf die Längsrichtung z am Bürstenkörper 11 aufweisen. Bei der Ausgestaltung gemäß Fig. 3 sind erste und zweite Befestigungsstellen 21, 22 als auch dritte und vierte Befestigungsstellen 23, 24 zueinander beabstandet, d.h. in Längsrichtung voneinander versetzt an den gegenüberliegenden Außenrändern 31, 32 des Bürstenkörpers 11 vorgesehen.

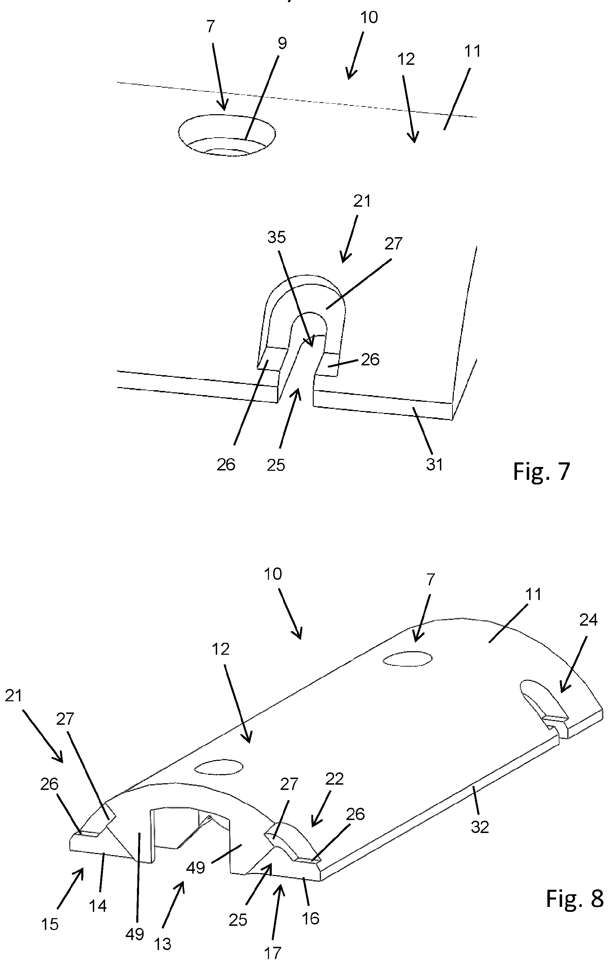

Die Befestigungsstellen 21, 22, 23, 24 sind randseitig ausgestaltet. Wie insbesondere unter Bezugnahme auf die Figuren 5 bis 8 dargestellt weist jede der Befestigungsstellen 21 eine die Oberseite 12 des Bürstenkörpers 11 durchsetzende Durchgangsöffnung 25 auf. Die Durchgangsöffnung 25 weist einen in Umfangsrichtung oder tangential vom Außenrand 31, 32 nach innen ragenden Schlitz 35 auf. Der Schlitz 35 weist gegenüber der Oberseite 12 radial nach innen versetzt eine an die Durchgangsöffnung 25 angrenzende erste etwa ebene Anlagefläche 26 und eine zweite, etwa ebene Anlagefläche 27 auf. Erste und zweite Anlageflächen 26, 27 können durch entsprechende Flächennormalen, nämlich eine erste Flächennormale 28 im Bereich der ersten Anlagefläche 26 und eine zweite Flächennormale 29 im Bereich der zweiten Anlagefläche 27 charakterisiert sein.

Die Anlageflächen 26, 27 können insbesondere zur Anlage des Befestigungselements 41 dienen. Das Befestigungselement 41 kann insbesondere als Schraube oder als Bolzen ausgestaltet sein. Es kann einen Kopf 44 mit einem längserstreckten Schaft 45 aufweisen. Im Bereich des Schafts 45, insbesondere an einem dem Kopf 44 abgewandten Ende des Schafts 45 kann ein Gewinde 46 ausgebildet oder vorgesehen sein. Das Gewinde 46 kann als Außengewinde implementiert sein. Der Kopf 44 kann dem Schaft 45 zugewandt eine sich transversal zur Längserstreckung des Schafts 45 erstreckende Anlagefläche 48 aufweisen, mittels welcher der Kopf 44 an einer der Anlageflächen 26, 27 wahlweise zur Anlage gelangen kann.

Derart unterschiedliche Anlagekonfigurationen sind insbesondere in Fig. 6 schematisch gezeigt. Dort ist im Bereich einer ersten Befestigungsstelle 21 ein Befestigungselement 41 vorgesehen, welches mit seinem Kopf 44 an der ersten Anlagefläche 26 zur Anlage gelangt. An der in Umfangsrichtung u gegenüberliegenden zweiten Befestigungsstelle 22 ist hingegen exemplarisch ein weiteres Befestigungselement 42 gezeigt, welches konzeptionell ähnlich dem ersten Befestigungselement 41 ausgestaltet ist und gleichermaßen mit seinem Kopf 44 an der zweiten Anlagefläche 27 zur Anlage gelangt.

Die Anlagefläche 27 kann gegenüber der Anlagefläche 26 in Bezug auf die in den Figuren 5 und 6 gezeigte Querebene oder Schnittebene geneigt ausgerichtet sein. Insoweit können die den jeweiligen Anlageflächen 26, 27 zugehörigen Flächennormalen 28, 29 etwa einen Winkel zwischen 15° und 75°, im gezeigten Ausführungsbeispiel etwa einen Winkel von etwa 45° zueinander einschließen. Die geneigte Ausrichtung der Anlagefläche 27 etwa auch gegenüber einer gedachten ebenen Unterseite 13 des Bürstenkörpers 11 ermöglicht es, dass das in der Durchgangsöffnung 25 aufgenommene Befestigungselement 42 radial nach innen von einer zweiten Anlagestelle 16 an der Unterseite 13 zu liegend kommt oder von der Unterseite 13 des Bürstenkörpers 11 hervorsteht.

Bei einer Anlage an der ersten Anlagefläche 26 kommt das freie Ende des Befestigungselements 41, wie insbesondere in Fig. 6 gezeigt, in einer Ausrichtung nahezu senkrecht zur gedachten ebenen Unterseite 13 des Bürstenkörpers 11 zu liegen. Hier kann der Schaft 45 des Befestigungselements 41 nahezu senkrecht von einer Anlagefläche 15 einer ersten Anlagestelle 14 angrenzend an den ersten Außenrand 31 und von der Unterseite 13 des Bürstenkörpers 11 hervorstehen. Für eine Montage an einer Trägerstruktur 1, etwa an einer Wand oder an einem Pfosten können hierfür vergleichsweise kurze Befestigungselemente 41 verwendet werden, was die Montage der Kratzbürste 10 immens vereinfachen kann.

Die schräge Ausrichtung der Durchgangsöffnung 25 in Richtung zur Mittellängsachse 6 ermöglicht eine dementsprechend schräge Aufnahme eines weiteren Befestigungselements 42, wie dies im Bereich der zweiten Befestigungsstelle 22 der Fig. 6 gezeigt ist. Die Unterseite 13 des Bürstenkörpers 11 kann im Wesentlichen eben ausgestaltet sein. Sie kann aber auch, wie insbesondere in den Figuren 5, 6, 9 oder 10 gezeigte, zwischen randseitigen Anlagestellen 14, 16 mit zugehörigen Anlageflächen 15, 17 auch eine dritte Anlagestelle 18 mit einer Vertiefung 19 aufweisen, die insbesondere eine Anlage der Unterseite 13 des Bürstenkörpers 11 an einer Trägerstruktur 1' ermöglicht, die eine unebene Außenkontur, etwa eine ovale, runde oder eckige Außenkontur aufweist.

Durch die schräge Ausrichtung der Durchgangsöffnung 25 kann das betreffende Befestigungselement 42 in einer schrägen Ausrichtung, d.h. schräg gegenüber der Unterseite 13 durch den Bürstenkörper 11 hindurchgesteckt werden und sodann angrenzend an die dritte Anlagestelle 18 und/oder deren Vertiefung 19 oder im Bereich der dritten Anlagestelle 18 oder der Vertiefung 19 von der Unterseite 13 des Bürstenkörpers 11 hervorstehen und dabei unmittelbar mit der Trägerstruktur 1' in Eingriff gelangen, wie dies schematisch in Fig. 6 dargestellt ist.

Die Trägerstruktur 1 kann hierbei ein Gegenbefestigungselement 43 darstellen oder als Gegenbefestigungselement 43 fungieren. Weist die Trägerstruktur beispielsweise ein Holz oder einen Holzwerkstoff auf, so kann der betreffende Werkstoff unmittelbar als Gegenbefestigungselement 43 fungieren, indem eine betreffende Schraube als Befestigungselement 41, 42 direkt in die Trägerstruktur 1, 1' eingeschraubt wird. Bei anderen Ausgestaltungen, etwa wenn die Trägerstruktur 1 aus Beton oder aus einem mineralischen Werkstoff gefertigt ist, kann zur Befestigung der Befestigungselemente 41, 42 ein Dübel oder dergleichen Gegenbefestigungselement 43 vorgesehen sein.

Im Bereich der einzelnen Befestigungsstellen 21, 22, 23, 24 kann die Halbschale 4 nach innenragende Befestigungsdome 49 aufweisen, deren Innenseite etwa fluchtend mit der, bzw. mit den Anlagegeflächen 15, 17 der randseitigen ersten und zweiten Anlagestellen 14, 16 zu liegen kommen. Auf diese Art und Weise kann insbesondere im Bereich der Befestigungsstellen 21, 22, 23, 24 eine nahezu vollflächige Anlage an etwa einer ebenen Trägerstruktur 1 erfolgen.

Wie insbesondere in den Figuren 5, 6 und 9 gezeigt, kann die Vertiefung 19 oder Ausnehmung im Bereich der dritten Anlagestelle 18 eine konkave Wölbung 33 oder eine kreisbogenartige Wölbung 33 aufweisen, die etwa der Außenkontur einer entsprechenden Trägerstruktur 1' gemäß Fig. 6 entsprechen kann. Gleichermaßen kann im Bereich der dritten Anlagestelle 18 auch eine Vertiefung 19 vorgesehen werden, die sich in Längsrichtung z vollständig durch den Bürstenkörper 11 oder entlang dessen Unterseite 13 erstreckt.

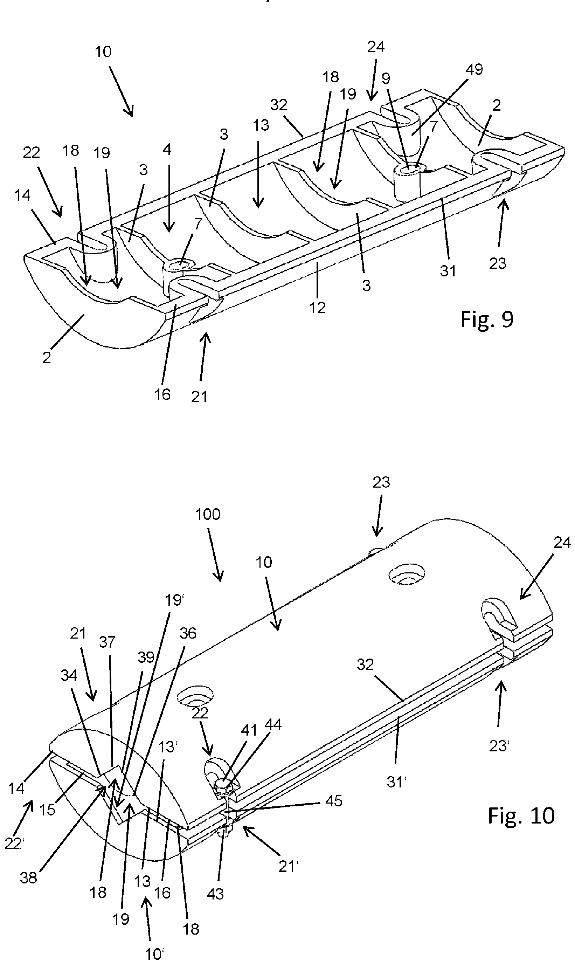

Die Vertiefung 19 kann nach einer weiteren Ausführungsform erste und zweite Schenkel 34, 36 aufweisen, die im Querschnitt oder in der Querebene betrachtet im Wesentlichen geradlinig ausgestaltet sind. Der erste und der zweite Schenkel 34, 36 bilden hierbei eine Anlagefläche 38, die etwa zur Aufnahme einer Außenecke eines Profils der Trägerstruktur 1 vorgesehen oder ausgebildet ist. Im in Fig. 10 gezeigten Ausführungsbeispiel erstreckt sich der erste Schenkel 34 etwa unter einem Winkel von 90° zum zweiten Schenkel 36. Ein in Richtung der Mittellängsachse 6 liegendes Innenende 37 des ersten Schenkels 34 grenzt hierbei an ein entsprechendes Innenende 39 des zweiten Schenkels 36 an; und umgekehrt.

Der Schnittpunkt oder die Verbindungsstelle von erstem und zweitem Schenkel 34, 36 kann eine Innen-Ausgestaltung bilden, die mit einem Außenecke eines Außenprofils der Trägerstruktur 1 korrespondieren kann. Insbesondere kann zwischen den Schenkeln 34, 36 eine Eck-Ausgestaltung einer Trägerstruktur 1, etwa eine Außenecke einer Wand und/oder eines Pfostens aufgenommen werden.

In Fig. 10 ist ferner eine Kratzbürstenanordnung 100 perspektivisch dargestellt, welche eine erste Kratzbürste 10 und eine zweite Kratzbürste 10' aufweist. Erste und zweite Kratzbürsten 10, 10' sind hierbei im Wesentlichen identisch ausgestaltet. Die erste und die zweite Kratzbürste 10, 10' können hierbei mit ihren jeweiligen Unterseiten 13 einander zugewandt angeordnet sein, sodass etwa die erste Befestigungsstelle 21 der ersten Kratzbürste 10 überdeckend mit der zweiten Befestigungsstelle 22' der zweiten Kratzbürste 10' zu liegen kommt. Gleichermaßen kann die zweite Befestigungsstelle 22 der erste Kratzbürste 10 überdeckend zur ersten Befestigungsstelle 21' der zweiten Kratzbürste 10' zu liegen kommen.

Die fluchtende Anordnung der Befestigungsstellen 22, 21' sowie 21, 22' ermöglicht eine unmittelbare Verbindung von erster und zweiter Kratzbürste 10, 10' über ihre jeweiligen Außenränder 31, 32' sowie 32, 31'. Hier kann beispielsweise ein Befestigungselement 41 in Form eines Schraubbolzens verwendet werden, wobei ein freies Ende des Schafts 45 des Befestigungselements 41 mit dem Gegenbefestigungselement 43, etwa in Form einer Schraubenmutter in Eingriff gelangt.

Der Kopf 44 des Befestigungselements 41 kann beispielsweise an der ersten Anlagefläche 26 der Durchgangsöffnung 25 der zweiten Befestigungsstelle 22 zur Anlage gelangen während das mit dem Schaft 45 des Befestigungselements 41 hiermit in Eingriff stehende Gegenbefestigungselement 43 an der ersten Anlagefläche 26 der Durchgangsöffnung 25 der ersten Befestigungsstelle 21' der zweiten Kratzbürste 10 zu liegen kommt.

Gleichermaßen können auch, wie etwa in Fig. 10 dargestellt dritte und vierte Befestigungsstelle 23, 24', bzw. 23', 24 einander fluchtend angeordnet sein, um erste und zweite Kratzbürsten 10, 10' zur Bildung einer Kratzbürstenanordnung 10 unmittelbar miteinander zu verbinden oder gegeneinander zu verspannen. Im Bereich der dann ebenfalls überdeckend zueinander zu liegen kommende Aussparungen 19, 19' an den einander zugewandten Unterseiten 13 von erster und zweiter Kratzbürste 10, 10' kann insbesondere eine längserstreckte Trägerstruktur 1, etwa in Form eines Pfostens aufgenommen werden. Die randseitige wechselseitige Befestigung von erster und zweiter Kratzbürste 10, 10' ermöglicht hier eine klemmende Anordnung von erster und zweiter Kratzbürste unter Einschluss einer pfostenartigen Trägerstruktur 1.

### Bezugszeichenliste

- 1: Trägerstruktur
- 2: Stirnwand
- 3: Rippe
- 4: Halbschale
- 5: Borsten
- 6: Mittellängsachse
- 7: Befestigungsstelle
- 8: Außenoberfläche
- 9: Durchgangsöffnung
- 10: Kratzbürste
- 11: Bürstenkörper
- 12: Oberseite
- 13: Unterseite
- 14: Anlagestelle
- 15: Anlagefläche
- 16: Anlagestelle
- 17: Anlagefläche
- 18: Anlagestelle
- 19: Vertiefung
- 21: Befestigungsstelle
- 22: Befestigungsstelle
- 23: Befestigungsstelle
- 24: Befestigungsstelle
- 25: Durchgangsöffnung
- 26: Anlagefläche
- 27: Anlagefläche
- 28: Flächennormale
- 29: Flächennormale
- 31: Außenrand
- 32: Außenrand
- 33: Wölbung
- 34: Schenkel
- 35: Schlitz
- 36: Schenkel
- 37: Innenende
- 38: Anlagefläche
- 39: Innenende
- 41: Befestigungselement
- 42: Befestigungselement
- 43: Gegenbefestigungselement
- 44: Kopf
- 45: Schaft
- 46: Gewinde
- 48: Anlagefläche
- 49: Befestigungsdom
- 100: Kratzbürstenanordnung

## Patentansprüche

1. Kratzbürste (10) zur Anordnung an zumindest einer Trägerstruktur (1), wobei die Kratzbürste (10) folgendes umfasst:
- einen längserstreckten Bürstenkörper (11) mit einer transversal zu einer Längsrichtung (z) des Bürstenkörpers (11) gewölbten Oberseite (12), an welcher mehrere Borsten (5) angeordnet oder anordenbar sind,
- wobei der Bürstenkörper (11) eine der Oberseite (12) abgewandte Unterseite (13) zur Anlage und/oder zur Befestigung an der Trägerstruktur (1) aufweist und
- wobei der Bürstenkörper (11) zumindest eine erste Befestigungsstelle (21) für ein erstes Befestigungselement (41) aufweist, die bezogen auf eine sich quer oder senkrecht zur Längsrichtung (z) erstreckenden Umfangsrichtung (u) versetzt zu einer Mittellängsachse (6) des Bürstenkörpers (11) am oder im Bürstenkörper (11) ausgebildet ist.

2. Kratzbürste (10) nach Anspruch 1, wobei die Oberseite (12) des Bürstenkörpers (11) in Umfangsrichtung (u) eine konvexe oder kreisbogenförmige Wölbung aufweist.

3. Kratzbürste (10) nach einem der vorhergehenden Ansprüche, wobei die Oberseite (12) des Bürstenkörpers (11) in Längsrichtung (z) eine konstante Querschnittskontur und/oder eine sich kontinuierliche oder geradlinige in Längsrichtung (z) erstreckende Außenoberfläche (8) an der Oberseite (12) aufweist.

4. Kratzbürste (10) nach einem der vorhergehenden Ansprüche, wobei der Bürstenkörper (11) in Umfangsrichtung (u) betrachtet einen ersten Außenrand (31) und einen gegenüberliegenden zweiten Außenrand (32) aufweist.

5. Kratzbürste (10) nach Anspruch 4, wobei die erste Befestigungsstelle (21) am oder angrenzend an den ersten Außenrand (31) im Bürstenkörper (11) ausgebildet ist.

6. Kratzbürste (10) nach einem der vorhergehenden Ansprüche, wobei der Bürstenkörper (11) zumindest eine zweite Befestigungsstelle (22) für ein zweites Befestigungselement (42) aufweist, welches in Umfangsrichtung (u) versetzt zur Mittellängsachse (6) und versetzt zur ersten Befestigungsstelle (21) am oder im Bürstenkörper (11) ausgebildet ist.

7. Kratzbürste (10) nach Anspruch 4 und Anspruch 6, wobei die zweite Befestigungsstelle (22) am oder angrenzend an den zweiten Außenrand (32) im Bürstenkörper (11) ausgebildet ist.

8. Kratzbürste (10) nach einem der vorhergehenden Ansprüche, wobei der Bürstenkörper (11) zumindest eine dritte Befestigungsstelle (23) aufweist, welche in Längsrichtung (z) von der ersten Befestigungsstelle (21) beabstandet am oder im Bürstenkörper (11) ausgebildet ist.

9. Kratzbürste (10) nach einem der vorhergehenden Ansprüche, wobei der Bürstenkörper (11) zumindest eine vierte Befestigungsstelle (24) aufweist, welche in Längsrichtung (z) von der zweiten Befestigungsstelle (22) beabstandet am oder im Bürstenkörper (11) ausgebildet ist.

10. Kratzbürste (10) nach einem der vorhergehenden Ansprüche, wobei zumindest die erste Befestigungsstelle (21) eine Durchgangsöffnung (25) aufweist, die mit einer ersten Anlagefläche (26) und mit einer zweiten Anlagefläche (27) zur wahlweisen Anordnung des ersten Befestigungselements (41) versehen ist.

11. Kratzbürste (10) wobei die erste Anlagefläche (26) eine erste Flächennormale (28) aufweist und wobei die zweite Anlagefläche (27) eine zweite Flächennormale (29) aufweist, wobei sich die erste Flächennormale (28) in einer von der Umfangsrichtung (u) und einer Radialrichtung (r) gebildeten Querebene unter einem vorgegebenen Winkel zur zweiten Flächennormale (29) erstreckt.

12. Kratzbürste (10) nach einem der vorhergehenden Ansprüche 4 oder 5, wobei zumindest die erste Befestigungsstelle (21) einen in den ersten Außenrand (31) hineinragenden Schlitz (35) aufweist.

13. Kratzbürste (10) nach Anspruch 12 und nach einem der vorhergehenden Ansprüche 10 oder 11, wobei eine Erstreckung des Schlitzes (35) in Umfangsrichtung (u) derart bemessen ist, dass das erste Befestigungselement (41) sowohl in Anlagestellung mit der ersten Anlagefläche (26) als auch in Anlagestellung mit der zweiten Anlagefläche (27) die Durchgangsöffnung (25) der ersten Befestigungsstelle (21) derart durchsetzt, dass das Befestigungselement (41) zur Befestigung mit einem korrespondierenden Gegenbefestigungselement (51) oder zur Befestigung an der Trägerstruktur (1) mit einem distalen Ende (45) von der Unterseite (13) des Bürstenkörpers (11) hervorsteht.

14. Kratzbürste (10) nach einem der vorhergehenden Ansprüche 4 oder 5, wobei der Bürstenkörper (11) an der Unterseite (13) eine erste Anlagestelle (14) und eine zweite Anlagestelle (16) aufweist, wobei die erste Anlagestelle (14) an den ersten Außenrand (31) angrenzt und wobei die zweite Anlagestelle (16) an den zweiten Außenrand (32) angrenzt.

15. Kratzbürstenanordnung (100) umfassend:
- eine erste Kratzbürste (10) nach einem der vorhergehenden Ansprüche, welche zumindest eine erste Befestigungsstelle (21) und eine zweite Befestigungsstelle (22) aufweist, die in Umfangsrichtung (u) voneinander versetzt im oder am Bürstenkörper (11) ausgebildet sind,
- eine zweite Kratzbürste (10'), welche identisch oder baugleich zur ersten Kratzbürste (10) ausgebildet ist und
- wobei die erste und die zweite Kratzbürste (10, 10') mit ihren Unterseiten (13, 13') einander zugewandt unter Einschluss einer Trägerstruktur (1) mittels erster und zweiter Befestigungselemente (41, 42) über ihre jeweiligen ersten und zweiten Befestigungsstellen miteinander verbindbar sind.
